# FASCICULE DE BREVET EUROPEEN

(11) **EP 0 481 882 B1**
(45) Date de publication et mention de la délivrance du brevet: **26.01.1994**
(21) Numéro de dépôt: 91402758.6
(22) Date de dépôt: 15.10.1991
(51) Int. Cl.: G07F 7/10

(54) **Procédé pour la ratification de codes secrets pour cartes à mémoire**
Verfahren zum Bestätigen geheimer Kodes in Speicherkarten
Method to confirm memory cards secret cyphers

(30) Priorité: 19.10.1990 FR 9012985
(43) Date de publication de la demande: 22.04.1992
(73) Titulaire: GEMPLUS CARD INTERNATIONAL, F-13420 Gémenos (FR)
(72) Inventeur: Geronimi, François, F-75116 Paris (FR)
(74) Mandataire: Schmit, Christian Norbert Marie

(56) Documents cités:
- EP-A- 0 044 039
- EP-A- 0 160 833
- EP-A- 0 286 094
- EP-A- 0 291 834
- WO-A-86/05613

## Description

La présente invention concerne un procédé pour la ratification de codes secrets pour cartes à mémoire.

Elle s'applique notamment à la réalisation de cartes à micro-circuits dites à puces utilisables dans tous les systèmes où l'accès à des informations ou à des services est sévèrement contrôlé. Il s'agit notamment des systèmes distributeur de monnaie fiduciaire, des systèmes de télévision à péage, des systèmes pour la distribution d'essence ou de fuel domestique, des systèmes d'accès au réseau téléphonique, des systèmes pour l'accès aux banques de données etc...

Dans les systèmes précédents, l'accès à des informations ou à des services n'est autorisé que sur la présentation d'un code secret, qui est comparé directement ou non à un code secret inscrit dans une mémoire non volatile de la carte à mémoire.

Dans sa définition la plus générale une carte est formée d'une ou plusieurs puces de micro-circuits sur lesquelles sont gravés des circuits formant l'un un dispositif de mémorisation et l'autre un organe de traitement formé par un microprocesseur ou tout dispositif électronique équivalent (logique câblée par exemple). Le dispositif de mémorisation comporte généralement une mémoire non volatile de type ROM ou EEPROM dans laquelle sont inscrits les microprogrammes nécessaires au fonctionnement de la carte et/ ou une mémoire vive type RAM pour la mémorisation des données et des instructions spécifiques de chaque application.

Une zone de mémoire particulière est habituellement prévue dans la mémoire EEPROM non volatile pour permettre le contrôle de la présentation des codes secrets. Suivant des réalisations connues, le programme d'exploitation du microprocesseur est chargé d'inscrire dans cette zone de mémoire un ou plusieurs bits chaque fois qu'il y a présentation d'un code secret, que cette présentation soit fructueuse ou non, de manière à bloquer la présentation de codes secrets supplémentaires après un nombre déterminé de mauvaises présentations. On pourra se reporter à l'état de la technique constitué par le document WO-A-8 605 613 dans lequel un tel système est décrit et dans lequel il est prévu de remettre le compteur des essais infructueux à zéro lorsque l'organe de traitement de données constate que le code secret présenté correspond au code secret enregistré dans la carte.

Par exemple, suivant un mode de réalisation connu, la zone de mémoire réservée à la sécurisation des présentations de codes secrets est partagée en deux, la première zone est inscrite d'un bit à chaque essai de présentation infructueux. Cette solution qui a pour avantage de provoquer des consommations de courant identiques quelque soit le type d'essai, permet de ne pas renseigner un fraudeur observant les consommations en courant de la carte sur la nature des essais fructueux ou non qu'il réaliser en tabulant chaque fois un code d'accès à la carte.

Toutefois, cette solution présente plusieurs inconvénients qui sont d'une part, d'occuper un espace important de la mémoire de données, et d'autre part, lorsque la carte possède plusieurs codes secrets d'associer à chaque code une zone, ce qui augmente encore le gaspillage en place dans la mémoire de données.

Enfin, lorsque les zones de présentation des codes secrets sont saturées, il n'est plus possible d'utiliser les codes secrets associés et la carte doit être jetée.

Le but de l'invention est de palier les inconvénients précités.

A cet effet, l'invention a pour objet un procédé pour la ratification de codes secrets pour cartes à mémoire à micro-circuits comportant un organe de traitement de données et un dispositif de mémorisation pour l'enregistrement d'un code secret et des données fournies à la carte caractérisé en ce qu'il consiste à déterminer dans le dispositif de mémorisation au moins une zone de mémoire de taille fixe pour écrire de façon systématique dans cette zone au moins un bit avant chaque présentation d'un code secret et à effacer l'ensemble des bits inscrits dans la zone de taille fixe dès que l'organe de traitement de données constate que le code secret présenté correspond au code secret enregistré dans la mémoire de données de la carte.

D'autres caractéristiques et avantages de l'invention apparaîtront ci-après à l'aide de la description qui suit faite en regard des dessins annexés qui représentent :
Figure 1, un mode de réalisation du procédé selon l'invention sous la forme d'un organigramme
Figure 2, le format d'une zone de mémoire réservée à l'inscription des essais de codes secrets.

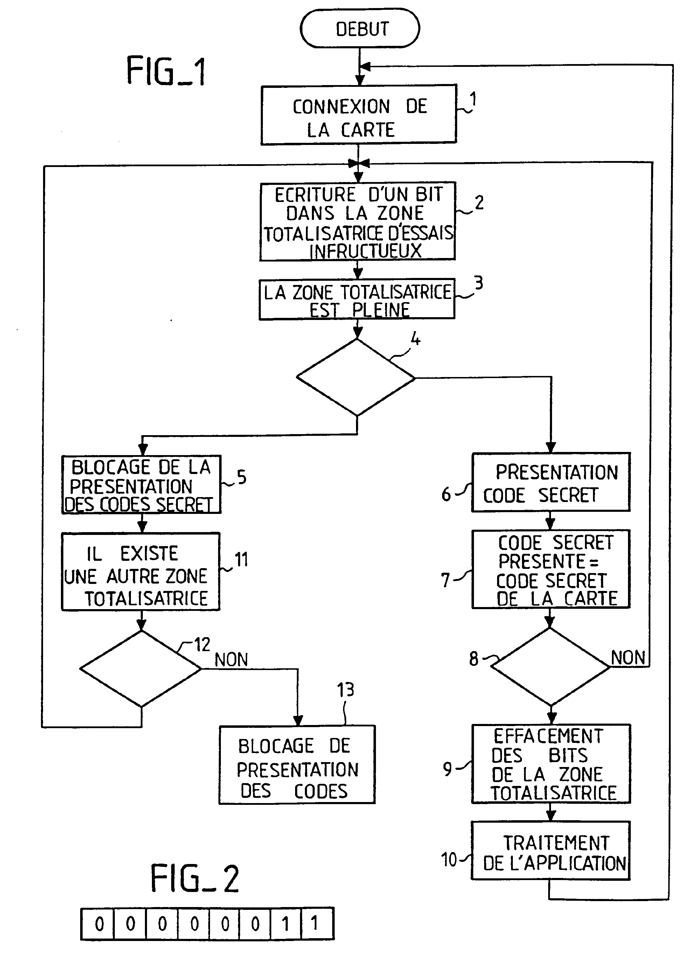

Le procédé selon l'invention représenté par les étapes 1 à 13 de l'organigramme de la figure 1, consiste à réserver une zone de taille paramètrable constante de la mémoire de données de la carte pour écrire dans cette zone un bit systématiquement avant la présentation d'un code secret et à effacer l'ensemble des bits de cette zone si le code secret présenté est correct. L'utilisation de la carte ou la présentation du code secret sont bloquées si le nombre de bits maximum est atteint. Ainsi en considérant une zone de mémoire à N positions du type de celle qui est représentée à la figure 2, lorsque les N positions sont dans l'état binaire 1 après N essais infructueux, toutes autres tentatives d'accès par un autre code confidentiel sont alors interdites.

Dans l'exemple de la figure 2, deux positions seulement sont déjà occupées, ce qui signifie que le code associé a déjà été présenté deux fois de façon incorrecte. Cependant, si par la suite le code est présenté correctement avant que les N positions soient dans l'état binaire 1, toutes les positions initialement mises à 1 sont remises à zéro.

Selon l'organigramme de la figure 1, le procédé débute aux étapes 1 et 2 par l'écriture d'un bit dans la zone totalisatrice d'essai infructueux dès que la carte est connectée à un appareil extérieur pour obtenir une prestation de service de cet appareil.

Aux étapes 3 et 4 un test est effectué pour vérifier l'état de la zone totalisatrice. Si à l'étape 3 la zone totalisatrice est pleine, le procédé interdit à l'état 5 la présentation du code secret associé à cette zone totalisatrice. Par contre, si à l'étape 3, la zone totalisatrice n'est pas pleine la présentation du code secret est autorisée à l'étape 5 et lorsque le code secret est présenté, un test a lieu aux étapes 6 et 7 pour vérifier que le code secret présenté est égal au code secret qui est inscrit dans la carte. Si dans ce test, le code secret présenté dans la carte n'est pas égal au code secret inscrit dans la carte le procédé retourne à l'étape 2 pour écrire un bit supplémentaire de la zone totalisatrice d'essais infructueux. Par contre, si le test effectué aux étapes 6 et 7 reconnaît que le code secret présenté est égal au code secret inscrit dans la carte, le procédé efface à l'étape 8 tous les bits déjà inscrits dans la zone totalisatrice d'essais infructueux et commande à l'étape 9 l'exécution de l'application pour laquelle la carte est programmée. A la fin de ce traitement, la carte peut être déconnectée de l'appareil extérieur, et les étapes 1 et 2 peuvent éventuellement être renouvelées par reconnexion de la carte à cet équipement.

Lors du blocage de la présentation des codes secrets qui a lieu à l'étape 5, le procédé peut effectuer aux étapes 11 et 12 un test pour vérifier s'il existe une autre zone totalisatrice d'essais infructueux présente dans l'organe de mémorisation de la carte. Si oui, le procédé retourne à l'exécution des étapes 2 et 3. Sinon le blocage de présentation des codes est maintenu à l'étape 13.

## Revendications

1. Procédé pour la ratification de codes secrets pour cartes à mémoires à micro-circuits comportant un organe de traitement de données et un dispositif de mémorisation pour l'enregistrement d'un code secret et des données fournies à la carte, caractérisé en ce qu'il consiste à déterminer dans le dispositif de mémorisation au moins une zone de mémoire de taille fixe pour écrire (2) de façon systématique dans cette zone au moins un bit avant chaque présentation d'un code secret et à effacer (9) l'ensemble des bits inscrits dans la zone de taille fixe dès que l'organe de traitement de données constate (7) que le code secret présenté correspond au code secret enregistré dans la carte.

2. Procédé selon la revendication 1, caractérisé en ce qu'il consiste à empêcher (5, 13) la présentation d'un code secret lorsque l'ensemble de la zone de mémoire de taille fixe est occupé par des bits écrits dans cette zone suite à des présentations infructueuses de codes secrets.

3. Procédé selon l'une quelconque des revendications 1 et 2, caractérisé en ce que la taille de la zone est paramètrable.

4. Procédé selon l'une quelconque des revendications 1 à 3, caractérisé en ce qu'il consiste à réserver dans la mémoire une ou des zones de mémoires de taille fixe supplémentaires (11) pour permettre lorsqu'une zone est remplie de réhabiliter (12) la présentation des codes secrets.

5. Procédé selon la revendication 4, caractérisé en ce qu'on efface les bits inscrits dans la zone de taille fixe et dans la ou les zones supplémentaires lorsque le code présenté correspond au code secret enregistré dans la carte.

## Claims

1. Method to confirm secret ciphers of memory cards with micro-circuits, comprising a data processing element and a memorizing device for recording a secret code and data supplied to the card, characterised by the fact that it consists of determining in the memorizing device at least one memory zone of fixed size for systematically writing (2) into this zone at least one bit between each presentation of a secret cipher and of erasing (9) all the bits written into the zone of fixed size as soon as the data processing element observes (7) that the secret cipher presented corresponds to the secret cipher recorded in the card.

2. Method in accordance with claim 1, characterised by the fact that it consists of preventing (5, 13) the presentation of a secret cipher when the whole of the memory zone of fixed size is occupied by bits written into this zone following unsuccessful presentations of secret ciphers.

3. Method in accordance with either of claims 1 and 2 characterised by the fact that the size of the zone is parametrable.

4. Method in accordance with any of claims 1 to 3 characterised by the fact that it consists of reserving in the memory one or more supplementary memory zones (11) of fixed size to make it possible to rehabilitate (12) the presentation of secret codes when a zone has been filled.

5. Method in accordance with claim 4, characterised by the fact that the bits written into the zone of fixed size and into the supplementary zone or zones are erased when the ciper presented corresponds to the secret cipher recorded in the card.

## Patentansprüche

1. Verfahren zur Überprüfung geheimer Codes in mit Mikroschaltungen versehenen Speicherkarten, mit einer Anordnung zur Bearbeitung von Daten und mit einer Speichervorrichtung zum Einspeichern eines geheimen Codes und der Karte zugeführter Daten, dadurch gekennzeichnet, daß es darin besteht, in der Speichervorrichtung wenigstens einen Speicherbereich einer bestimmten Größe festzulegen und in systematischer Weise in diesen Bereich wenigstens ein Bit vor jeder Eingabe eines geheimen Codes einzuschreiben (2) und die Gesamtheit der in dem Abschnitt festgelegter Größe eingeschriebenen Bits zu löschen (9), sowie die Anordnung zur Bearbeitung der Daten feststellt (7), daß der eingegebene geheime Code dem in der Karte gespeicherten geheimen Code entspricht.

2. Verfahren nach Anspruch 1, dadurch gekennzeichnet, daß es darin besteht, die Eingabe eines geheimen Codes zu verweigern (5, 13), wenn die Gesamtheit des Speicherbereichs der bestimmten Größe von Bits besetzt ist, die in diesem Bereich als Folge vergeblicher Eingaben geheimer Codes eingeschrieben sind.

3. Verfahren nach einem der Ansprüche 1 und 2, dadurch gekennzeichnet, daß die Größe des Bereichs parametrierbar ist.

4. Verfahren nach einem der Ansprüche 1 bis 3, dadurch gekennzeichnet, daß es darin besteht, im Speicher einen oder mehrere zusätzliche Speicherbereiche (11) bestimmter Größe zu reservieren, um die Eingabe geheimer Codes auch dann zu ermöglichen (12), wenn ein Bereich gefüllt ist.

5. Verfahren nach Anspruch 4, dadurch gekennzeichnet, daß die im Bereich der bestimmten Größe oder in dem oder den zusätzlichen Bereichen eingeschriebenen Bits gelöscht werden, wenn der eingegebene Code dem in der Karte eingespeicherten geheimen Code entspricht.
